# EUROPEAN PATENT APPLICATION

(11) **EP 1 524 169 A1**
(43) Date of publication of application: **20.04.2005**
(21) Application number: 03380233.1
(22) Date of filing: 17.10.2003
(51) Int. Cl.: B62B 1/26, B62B 1/14, B62B 5/00

(54) **Device for transporting flattened articles**

(71) Applicant: Paris Florensa, Marcial, 08201 Sabadell (Barcelona) (ES); Sudon, Roger Jacques Lucien, 69630 Chaponost (FR); Brugnera, Amédée Francis, 67930 Beinheim (FR)
(72) Inventor: Paris Florensa, Marcial, 08201 Sabadell (Barcelona) (ES); Sudon, Roger Jacques Lucien, 69630 Chaponost (FR); Brugnera, Amédée Francis, 67930 Beinheim (FR)
(74) Representative: Manresa Val, Manuel

(57) **Abstract**

It includes two wheels (1,2) and a first axis (3) that joins both wheels and that includes a structure formed by a second axis (6), a first sheet (4), linked to the second axis (6) by means of a regulator device (10) that moves said first sheet (4) towards or away from the second axis (6), a third inclined axis (14) being inclined in respect to the other two axes, and being movable, a second sheet (5), fixed to the third axis (14) and being parallel to the first sheet (4), a support (13), fixed to the second sheet (5), and movable based on the weight of the article (11), means for the device immobilization consisting of pins (7,8) and orifices or cavities located in the rim, and a foot (12) fixed to the structure.

## Description

Device for transporting flattened articles, that comprises two wheels, a first axis that joins both wheels and that includes a structure made up by a second axis, perpendicular to the referred first axis, a first sheet, linked to the mentioned second axis by a regulator device that approaches or separates both sheets, a third axis inclined in respect to the other two axes, and movable, a second sheet, shared in common to the indicated third axis and parallel to the first sheet, a support, shared in common to the referred second sheet, with a length that it is enough to occupy the space between both sheets, and movable based on the weight of the article, pins, fixed to a point of the structure and orifices or cavities located in the inner part of the rim of the wheels, with enough depth to house a part of the referred pin in its interior, and a foot fixed to the structure.

### BACKGROUNDS OF THE INVENTION

It is known in the state of the art different patents and utility models that refer to devices for transporting flattened articles.

Thus, it is highly known the image of two people transporting a flat, great article and with a certain weight, as for example a wood table, grasping it manually each one by two opposite ends respectively, all it with the consequent effort and the use, as already it has been said before, of two people.

In order to solve this image it has been developing series of inventions that as follows we will explain in detail.

It is known the Spanish Utility Model Utility n° 9801481 (1041269) of Mr. Manuel Rosales Touza that refers a special wheelbarrow for transporting pieces of furniture. It is formed by a chassis or a frame made of a metallic material, with two folding arms located in the inner part of the chassis or frame, having a articulated extensible central arm, and having small wheels located in the upper part.

Also it is known the Spanish Utility Model n° 200000617 (1045689), in the name of Mr. Rosendo González Zomeo, that covers an improved wheelbarrow. It is constituted by a structure made up by two parts angularly ready, in one of whose parts two arms for the handling are included, whereas the other part is provided with swinging wheels, being trains of wheels joined to the angular zone, which ones are joined from the other end by means of respective tights in respect to the transom of the structural part, being then in inclined position.

This last applicant is also the owner of the Spanish Utility Model n° 200001589 (1046450). This invention refers to a load wheelbarrow, that comprises a zone for the positioning of the load that it is had to be transported, wheels located at the ends of a spin axis and at least a handle for the handling of the wheelbarrow, tilting the zone for the positioning of the load around the spin axis, in each end of this spin axis are arranged three wheels, whose centres define a triangle and by the fact that it comprises a motor that drives the rotation of the wheels around the spin axis.

Also the German Gebrauchsmuster is known n° 29812641, with equivalent in patent WO 00/03908, of 1998, of ERNST ZIEKER GMBH MECHANISCHE WERKSTÄTTE, that comprises two assemblies arranged in mirror-image fashion in relation to each other and coupled together by a support and clamping element (3) and a hinge strip (4). When the transporter is loaded, the assemblies tilt in relation to each other so that the support and clamping elements clamp the object (6) located between them, and when the transporter is unloaded the assemblies swing away from each other and release the object.

In Spain, it is necessary to mention and it is precise to emphasize in the state of the art the Utility Model n° 253,653, of Mr. José Garcia Cabrera, of 1980, that refers to transporting trolley for plates of marbles, wood, cement, glass and other materials. It is constituted by a piece in "V", perpendicular to the axis of the wheels, protected said rubber piece. It has a jaw, made of rubber too, for plate subjection. The set of hinge jaws is consitituted by axes, flat bars and springs, that acts on such jaws, by the weight of the plates.

The German Gebrauchsmuster n° 2156173, of 1973, of ZWEIRÄDRIGES TRANSPORTGERÄT FUR PLATTENFÖRMIGES GUT, consists of a wheelbarrow with two joined and fixed sheets by means of a hinge that also joins the two parts of the axis of the wheels, in such a way that the selected width is obtained opening or closing this hinge.

Finally, it is also necessary to mention the US Patent n° 4.270.741, of 1979, in the name of Mr. Paul N. Hurst, that consists on a vise for thin objects such as doors has improved features that allows the doors to be transported on the vise and also accommodates various thicknesses of doors. The vise has a pair of jaws hinged together by a spring loaded hinge. The spring urges the jaws apart. The weight of the door overcomes the spring, drawing the jaws into contact with the door for support. Each jaw is mounted on a wheel for transporting. Each jaw also has an adjustable plate mounted on its inner side for varying the effective opening of the jaws.

### BRIEF DESCRIPTION OF THE PRESENT PATENT APPLICATION

The object of the present application refers to a device for the transport and more in concrete a device specially intended, although not exclusively, to the transport of flattened and great surface articles.

With the use of the device object of the present patent application, it is highly simplified the mentioned mean of transport, being only necessary only one person who will make the same work and with less effort.

The present device offers, to a single person, the possibility of handling and transporting any voluminous or heavy load and remarkably flattened very easily, like for example fire-resistant doors, carpentry with mounted crystals, wood tops, agglomerates and similars, as it is will be described herinafter.

A great number of the inventions previously indicated in the backgrounds of the invention, taking into account that the sheets are hinged to each other, do not allow that the wheels drive perpendicular to the ground, but inclined, which causes a lot of difficulties in a high degree in the the control of the same ones by the worker.

This invention has remarkably improved the existing inventions until now. On the one hand, the fixation system of the article to the device allows that initially a width is predetermined, and is the own article while it is increasing its pressure over the support, the one that allows that both sheets approach and finally they are fixed.

At the same time it includes a pedal that is linked with the third axis, the one that serves so that the support goes downwards, in such a way that pressing said pedal it is made easier the ejection of the article to the outside, with any necessity to make a great physical effort.

In addition, there is a foot, that it makes easier to obtain the balance position of the device when this one is not working, and to avoid that at the same it cannot be controlled and it moves at the moment when the article is introduced between the two sheets.

In order to better improve the immobilization of the device it has been made series of cavities or orifices in the inner face of the rims of the wheels. Also a pair of pins has been fixed, one per wheel, whose bolt is inserted within one of the cavities or orifices of the rim, which prevents that the device can move, being then completely immobilized and capable of being able to be loaded with the chosen article.

In the sheet, which is nonshared in common to the third axis or nonshared in common to the support, it has been foreseen a regulator device that approaches or separates said first sheet to the second axis, and consequently separating or approaching said first sheet to the second sheet. That regulator device can be of the type handle-bar.

All these advantages causes that the present invention is a very desirable product that enormously facilitates its handling for its later transport, with the minimum physical effort by the worker who drives the operation.

### BRIEF DESCRIPTION OF THE DRAWINGS

With the purpose to facilitate the explanation four sheets of drawings are attached to the present description, in which a practical case of an embodiment has been reproduced, which is mentioned only for exemplificative, non limitative of the scope of the present invention:
- figure 1 shows a front view of the present device, previous to the introduction of the article to be transported,
- figure 2 represents another view of this device with the article to be transported already fixed to the referred device,
- figure 3 is a detail of the central area of the device, view from the opposite side to the one shown in figures 1 and 2, and
- figure 4 is a detail of the area of the wheels.

### CONCRETE EMBODIMENT OF THE APPLICATION

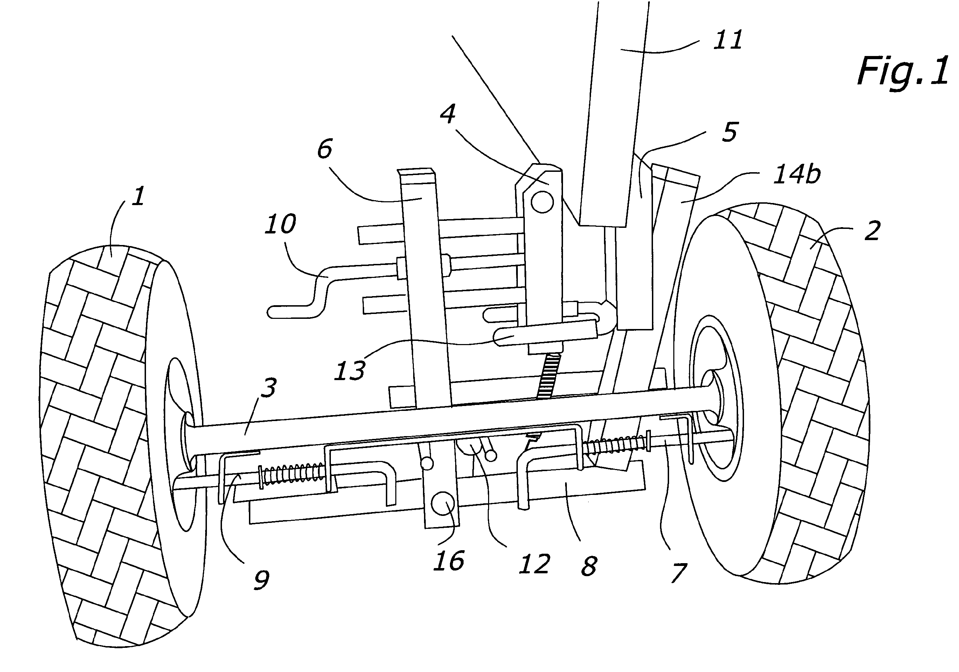

Figure 1 represents wheels 1,2, a first axis 3, a first sheet 4, a second sheet 5, a second axis 6, a handle-bar 10, a support 13, pins 7,9, a pedal 8, a bearance 16, a foot 12, the article 11 and the protector 14b of the third axis (that in this view is in the inner part of said protector).

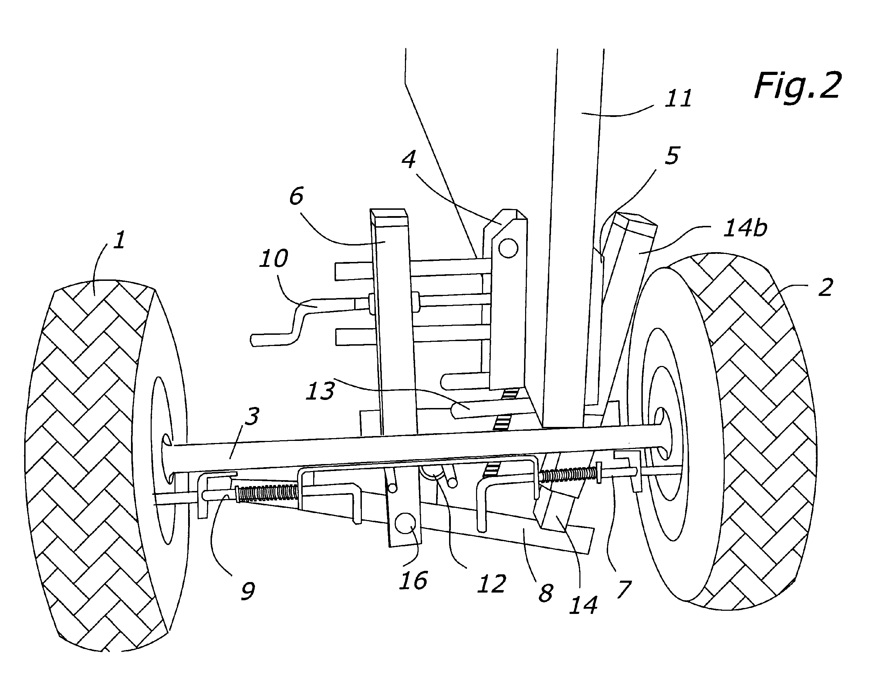

Figure 2 includes the same the elements that in figure 1, that is to say, the referred wheels 1,2, the first axis 3, the first sheet 4, the second sheet 5, the second axis 6, the handle-bar 10, the support 13, the pins 7,9, the pedal 8, the bearance 16, the foot 12, the article 11 and the protector 14b, as well as the third axis 14.

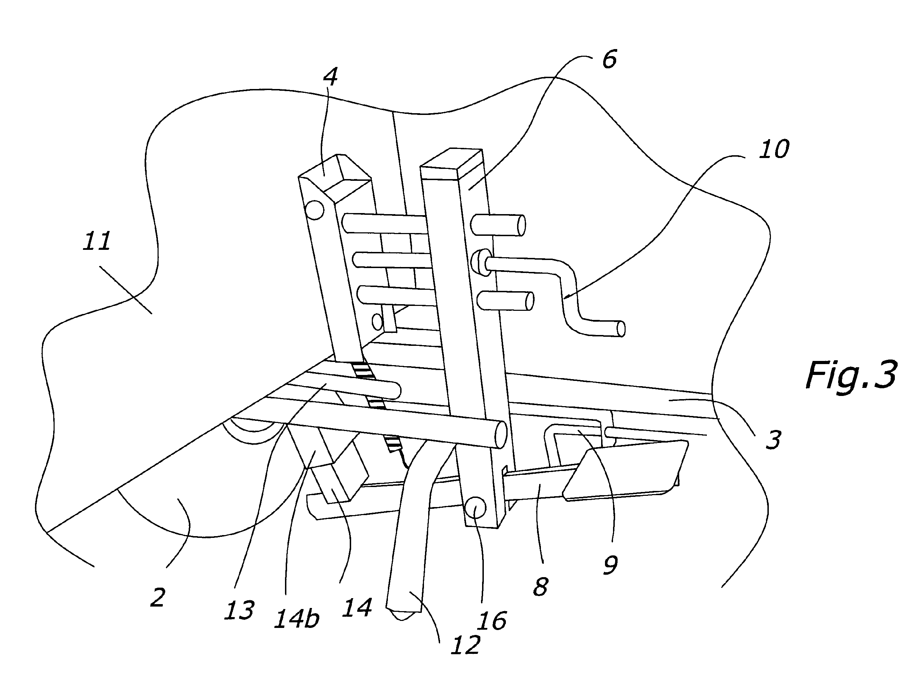

Figure 3 shows the wheel 2, the first axis 3, the first sheet 4, the second axis 6, the handle-bar 10, the support 13, the article 11, the third axis 14 and its protector 14b, the foot 12, the pedal 8, the bearance 16 and the pin 9.

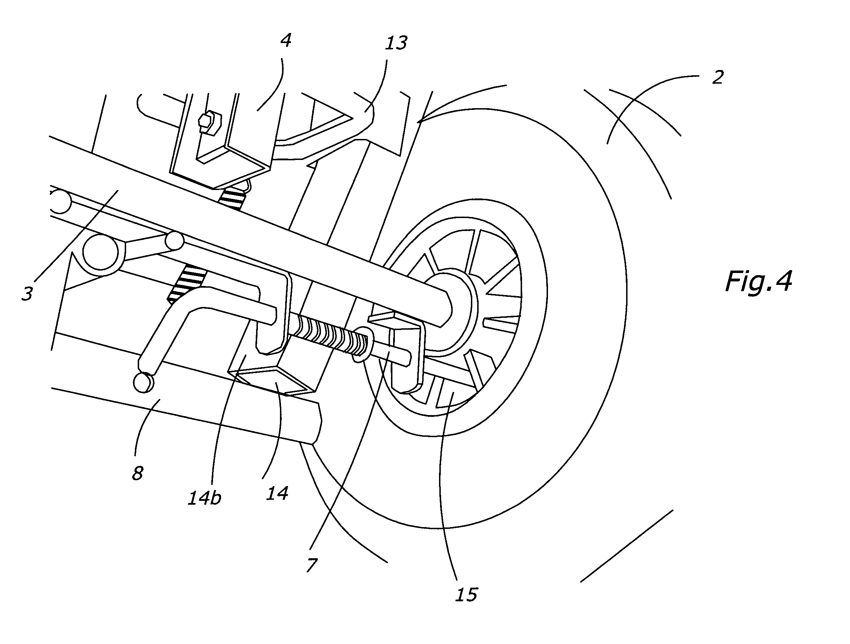

Referred wheel 2, the mentioned first axis 3, the first sheet 4, the support 13, the third axis 14 with its protector 14b, the cavities or orifices 15 inside a rim of the wheel, the bolt 7 and the pedal 8 are illustrated in figure 4.

Thus in a concrete embodiment, at a first moment the device is immobilized and braked, that is to say, pins 7,9 are inside the orifices or cavities 15, and the structure is supported by the foot 12, so that the device is then in a perfect balance, with three bearances in respect to the ground (the two wheels and the foot).

It is necessary to remark that the pedal 8 is in a parallel position or practically parallel to the first axis 1, being in addition the third axis 14 completely hidden in the inner part of the protector 14b, so that it is not visible, at first sight, from the outside.

In addition, the support 13 is in its highest position, like the second sheet 5, since the referred third axis 14, as it has been explained in the previous paragraph, is completely hidden in the inner part of the protector 14b, and it is equivalent to say that its position is moved away to the ground or floor.

Once the worker with article 11 to be transported arrives, in this concrete embodiment it has been used a door although it could be any other article, like for example some of the mentioned in the "brief description", he puts the door 11, by its thinner part, that is, by the edge, inside the device, between the two sheets 4,5.

Once the door is leaning in the support 13, this one as it is shared in common with the second sheet 5 drags it downwards, and said sheet as it is shared in common with third axis 14, does the same with this one.

The lower end of the third axis 14 is linked with the pedal 8, reason why in the moment that said third axis 14 appears outside the protector 14b, it moves downwards the end of the pedal 8 that is articulated and tilted in respect to the third axis.

At the same time, as the pedal acts like a handle, the other end of the pedal 8, thanks to the bearance 16, rises.

Once the support 13 has reached its maximum inner route, in case of it is necessary, can be fitted and be fixed the first sheet 4 to the door 11 by means of a handle-bar 10, that approaches said first sheet 4 to the door 11, to assure much more the door.

Once the worker verifies that the door 11 is immovable, removes the pins 7,9 of the inner part of the orifices or cavities 15 and starts to transport the door 11 until the indicated place, pushing it and moving it by means of the wheels 1,2.

When he has arrived to the referred place, the worker leans the device over the foot 12, introduces the pins 7,9 inside the orifices or cavities 15, in such a way that the device remains stopped and immovable.

Now it is necessary to do the opposite operation to the one explained previously. In the case of having fixed by means of handle-bar 10, this is tourned in the opposite sense to the one used in the previous paragraphs, in such a way that the first sheet 4 stops to press the door 11.

In a second phase the pedal 8 is trod down, in such a way that the ends of the handle push up the third axis 14 and with it the second sheet 5 and the support 13 go up, that provokes that the door 11 goes up, releasing it at the same time, being able then to be taken by the worker again, without no type of effort.

Support 13, in this concrete embodiment is formed by a fork, whose inner space has a higher length than the overall first sheet length 4.

Although it depends on the model of the device, the alluded foot 12 is located in an approximately central position in reference to the structure.

The present patent of invention describes a new device for transporting flattened articles. The examples mentioned here are not limitatives of the present invention, for that reason it will be able to have different applications and/or be adapted, all of them within the scope of the following claims.

## Claims

1. Device for transporting flattened articles (11), of the type that comprises at least two wheels (1,2) and a first axis (3) that joins both wheels characterized because it includes a structure made up by:
- a second axis (6), perpendicular to referred the first axis (3),
- a first sheet (4), linked to the mentioned second axis (6) by means of a regulator device (10) that approaches or separates said first sheet (4) to the second axis (6),
- a third inclined axis (14) in respect to the other two axes, and movable,
- a second sheet (5), shared in common to the mentioned third axis (14) and parallel to the first sheet (4),
- a support (13), shared in common to the referred second sheet (5), with enough length in order to occupy the existing space between both sheets (4,5), and movable based on the weight of the article (11),
- immobilization means of the device consisting of at least a pin (7,8), fixed to a point of the structure and orifices or cavities (15) located in the inner part of the rim of the wheels (2,3), with enough depth to house a part of the referred pin in its inner part, and
- at least a foot (12) fixed to the structure.

2. Device in accordance with claim 1 **characterized in that**, in addition, it incorporates a pedal (8), articulated in a point, located approximately in a central point in relation to a bearance (16) located in the second axis (6), and articulated and tilted by one of its ends in relation to the previously indicated third axis (14).

3. Device in accordance with claim 1 or 2 **characterized in that** the movement of the mentioned third axis (14) is in reference to the height.

4. Device in accordance with claim 1 **characterized in that** the support (13) is made up by a fork whose inner space has a length higher than the length of the first sheet (4).

5. Device in accordance with claim 1 **characterized in that** the referred foot (12) is located in an approximately central zone or point of the structure.

6. Device in accordance with claim 1 **characterized in that** the referred regulator device (10) is a handle-bar.

7. Device in accordance with claim 1 **characterized in that** includes two pins (7,9) and both wheels (1,2), in the surface of the rim, include orifices or cavities (15).

## Amended claims

### Amended claims in accordance with Rule 86(2) EPC.

**1.** Device for transporting flattened articles (11), comprising at least two wheels (1,2) and a first axis (3) that joins both wheels (1,2) and including a structure which comprises:
- a second axis (6),
- a first sheet (4),
- a third inclined axis (14) being inclined in respect to the other two axes, and being movable,
- a second sheet (5), fixed to the third axis (14) and being parallel to the first sheet (4),
- a support (13), fixed to the second sheet (5), with enough length in order to occupy the existing space between both sheets (4,5), and movable based on the weight of the article (11), and
- at least a foot (12), for supporting the device on the ground, which foot (12) is fixed to the structure,
**characterised in that**
- said second axis (6) is perpendicular to said first axis (3),
- said first sheet (4) is linked to said second axis (6) by means of a regulator device (10) that moves said first sheet (4) towards or away from the second axis (6), and
- immobilization means of the device consisting of at least a pin (7,9), fixed to a point of the structure and orifices or cavities (15) located in the inner part of the rim of the wheels (1,2), with enough depth to house a part of the referred pin in its inner part.

**2.** Device in accordance with claim 1 **characterized in that**, in addition, it incorporates a pedal (8), articulated in a point, located approximately in a central point in relation to a bearance (16) located in the second axis (6), and articulated and tilted by one of its ends in relation to the previously indicated third axis (14).

**3.** Device in accordance with claim 1 or 2 **characterized in that** the movement of the mentioned third axis (14) is in reference to the height.

**4.** Device in accordance with claim 1 **characterized in that** the support (13) is made up by a fork whose inner space has a length higher than the length of the first sheet (4).

**5.** Device in accordance with claim 1 **characterized in that** the referred foot (12) is located in an approximately central zone or point of the structure.

**6.** Device in accordance with claim 1 **characterized in that** the referred regulator device (10) is a handle-bar.

**7.** Device in accordance with claim 1 **characterized in that** includes two pins (7,9) and both wheels (1,2), in the surface of the rim, include orifices or cavities (15).
